# EUROPÄISCHE PATENTSCHRIFT

(11) **EP 4 620 702 B1**
(45) Veröffentlichungstag und Bekanntmachung des Hinweises auf die Patenterteilung: **09.12.2026**
(21) Anmeldenummer: 25161614.0
(22) Anmeldetag: 04.03.2025
(51) Int. Cl.: B60C 11/13, B60C 11/03

(54) **NUTZFAHRZEUGREIFEN**
COMMERCIAL VEHICLE TYRE
PNEU DE VÉHICULE UTILITAIRE

(30) Priorität: 20.03.2024 DE 102024107980
(43) Veröffentlichungstag der Anmeldung: 24.09.2025
(73) Patentinhaber: Continental Reifen Deutschland GmbH, 30175 Hannover (DE)
(72) Erfinder: Schwenke, Andreas, 30175 Hannover (DE); Kristen, Florian, 30175 Hannover (DE); Yeo, Chun Yi, 30175 Hannover (DE); Vrabel, Miroslav, 020 01 Púchov (SK)
(74) Vertreter: Continental Corporation

(56) Entgegenhaltungen:
- WO-A1-2015/052862
- DE-A1- 102010 016 977
- DE-A1- 102017 202 939
- JP-A- 2009 292 343
- JP-A- 2012 020 702
- JP-A- 2012 040 891
- US-A- 4 955 415
- US-A1- 2005 076 986
- US-A1- 20230 028 931

## Beschreibung

Die Erfindung betrifft einen Nutzfahrzeugreifen mit einem Laufstreifen mit zwei, durch eine die Profiltiefe und einen Rillengrund aufweisenden Umfangsrille voneinander getrennten Profilrippen, welche an der Umfangsrille je eine Rippenkante und eine an diese anschließende Rippenwand aufweisen, wobei zwischen den Rippenwänden, im in Draufsicht in axialer Richtung ausgerichteten Querschnitt betrachtet, ein parallel zur Laufstreifenperipherie ermittelter, in Richtung Rillengrund nicht zunehmender, gegenseitiger Abstand vorliegt,
wobei zumindest eine Profilrippe mit in die Umfangsrille einmündenden Querrillen mit einer Breite von 0,40 mm bis 6,00 mm, einer maximalen Tiefe von 60% bis 100% der Profiltiefe und einer an der Umfangsrille liegenden Rillenmündung versehen ist,
wobei am Rillengrund der Umfangsrille zu den Rippenkanten beabstandete, je einer Querrille zugeordnete und an der der Rillenmündung der Querrille gegenüberliegenden Rippenwand angebundene, in Draufsicht kreissegmentförmige Vorsprünge mit je einer durchgehend nach außen gewölbten Vorsprungflanke und je einer in Draufsicht in axialer Richtung verlaufenden Symmetrieebene ausgebildet sind, wobei der Vorsprung in radialer Richtung durch eine Deckfläche begrenzt ist und wobei die Umfangsrille seitlich jedes Vorsprungs jeweils eine von ihrem Rillengrund und der Vorsprungflanke mitbegrenzte radial innere Rillenverengung aufweist.

Ein derartiger Nutzfahrzeugreifen ist beispielsweise aus der DE 10 2017 202 939 A1 bekannt. Dieser Nutzfahrzeugreifen weist einen Laufstreifen mit zwei Profilrippen auf, welche durch eine in Draufsicht gerade verlaufende, auf Profiltiefe ausgeführte Umfangsrille voneinander getrennt und jeweils mit in die Umfangsrille einmündenden Querrillen mit einer Breite von 4,0 mm bis 12,0 mm und einer Tiefe von 100% der Profiltiefe versehen sind, wobei die Umfangsrille mit den Querrillen in Draufsicht T-Kreuzungen bilden. In den Kreuzungsbereichen der T-Kreuzungen sind am Rillengrund der Umfangsrille zu den Rippenkanten beabstandete, an der der Rillenmündung der Querrille gegenüberliegenden Rippenwand angebundene, in Draufsicht beispielsweise kreissegmentförmige Vorsprünge ("Vorsprünge in Form von halben Kreiszylindern") mit je einer durchgehend nach außen gewölbten Vorsprungflanke ausgebildet. Die Vorsprünge dienen als Steinauswerfer, verhindern also ein Verfangen von Steinen in den in dieser Hinsicht kritischen Kreuzungsbereichen.

Bei Nutzfahrzeugreifen der eingangs genannten Art trägt die auf Profiltiefe ausgeführte Umfangsrille des Laufstreifens beim Fahren auf nasser Fahrbahn bekannter Weise zur wirksamen Entwässerung des Laufstreifens bei. Die vorgesehenen, als Steinauswerfer wirkenden Vorsprünge reduzieren lokal den Rillenquerschnitt, wodurch das Wasserdrainagevermögen der Umfangstille reduziert ist.

Der Erfindung liegt die Aufgabe zugrunde, bei einem Nutzfahrzeugreifen der eingangs genannten Art unter Aufrechterhaltung der steinabweisenden Wirkung der Vorsprünge das Wasserdrainagevermögen zu erhöhen.

Gelöst wird die gestellte Aufgabe erfindungsgemäß dadurch, dass die Deckfläche, im entlang der Symmetrieebene ausgerichteten Querschnitt betrachtet, S-förmig geschwungen verläuft, sich mit zunehmender Entfernung von der Rippenwand dem Rillengrund in radialer Richtung annähert und tangential an die Vorsprungflanke sowie tangential an die Rippenwand anschließt.

Die in Draufsicht kreissegmentförmigen Vorsprünge sorgen in Kombination mit der radial inneren Rillenverengung für einen strömungsberuhigten Wasserfluss um den Bereich des Vorsprungs, insbesondere durch die Rillenverengung hindurch. Beim Fahren auf nasser Fahrbahn wird der Vorsprung - im Gegensatz zum Vorsprung aus der DE 10 2017 202 939 A1 - nicht mehr komplett von Wasser "überströmt", sondern es wird Wasser an diesem seitlich vorbeigeleitet. Dadurch ist das Wasserdrainagevermögen erhöht, wobei die steinabweisende Wirkung der Vorsprünge erhalten bleibt. Die Deckfläche ist für die Rissbeständigkeit und somit für die Haltbarkeit des Vorsprungs von Vorteil.

Gemäß einer bevorzugten Ausführung ist vorgesehen, dass die Umfangsrille, in Draufsicht betrachtet, in Form einer Welle verläuft und den Profilrippen einander durch die Umfangsrille getrennte Rippeneinbuchtungen und Rippenausbuchtungen verleiht, wobei jede Rippenausbuchtung an der Rippenaußenfläche von einem durchgehend gebogen verlaufenden, aus der Profilrippe in axialer Richtung herausgewölbten Rippenkantenabschnitt begrenzt ist und einen an diesen anschließenden Rippenwandabschnitt aufweist, wobei sich die Rillenmündungen der Querrillen jeweils gegenüberliegend zu einem an einen herausgewölbten Rippenkantenabschnitt anschließenden Rippenwandabschnitt befinden und die Vorsprünge an diese Rippenwandabschnitte angebunden sind.

Durch diese Maßnahme sind die Position und Ausführung der Vorsprünge auf spezielle Weise auf eine wellenförmig verlaufende Umfangsrille abgestimmt. Die in Draufsicht kreissegmentförmigen Vorsprünge, welche sich an den an herausgewölbten Rippenkantenabschnitten anschließenden Rippenwandabschnitten befinden und eine die am Vorsprung vorbeiführende, radial innere Rillenverengung mitbegrenzende Vorsprungflanke aufweisen, stellen einen strömungsberuhigten Wasserfluss entlang der Rillenverengung sicher. Dieses spezielle Rillen-Vorsprung-Konzept sorgt somit beim Fahren auf nasser Fahrbahn für eine deutlich erhöhtes Wasserdrainagevermögen.

Gemäß einer weiteren bevorzugten Ausführung weist die radial innere Rillenverengung, im in Draufsicht in axialer Richtung verlaufenden Querschnitt betrachtet, an ihre schmälsten Stelle eine Breite von 25% bis 65%, insbesondere von 35% bis 55%, der in Draufsicht in axialer Richtung zwischen den Rippenkanten ermittelten Breite der Umfangsrille auf, wobei die Breite der Rillenverengung zwischen zwei in radialer Richtung verlaufenden Hilfslinien ermittelt ist, von welchen die eine durch das radial äußere Ende der Vorsprungflanke und die andere durch das der Vorsprungflanke abgewandte, der jeweiligen Rillenmündung zugewandte Ende des Rillengrunds verläuft. Eine derart breit ausgeführte Rillenverengung liefert in Kombination mit dem korrespondierenden Vorsprung eine vorteilhafte Balance zwischen einem guten Schutz vor dem Verfangen von Steinen in der Umfangsille und einem guten Wasserdrainagevermögen.

Gemäß einer weiteren bevorzugten Ausführung ist vorgesehen,
dass der Vorsprung, im in Draufsicht in axialer Richtung verlaufenden Querschnitt betrachtet, eine gegenüber dem Niveau der Profiltiefe in radialer Richtung ermittelte, maximale Höhe von 20% bis 50%, insbesondere von 25% bis 40%, der Profiltiefe aufweist,
   und/oder
dass der Vorsprung eine in Draufsicht in Umfangsrichtung ermittelte, maximale Länge von 3,00 mm bis 8,00 mm, insbesondere von 4,00 mm bis 7,00 mm, aufweist.
Auch diese Maßnahme trägt zu einer günstigen Balance zwischen der steinabweisenden Wirkung der Vorsprünge und einem hohen Wasserdrainagevermögen der Umfangsrille bei.

Bevorzugt liegt die maximale Höhe des Vorsprungs zumindest am Rippenwandabschnitt vor.

Für die Stabilität des Vorsprungs ist es von zusätzlichem Vorteil, wenn die Vorsprungflanke, im entlang der Symmetrieebene ausgerichteten Querschnitt betrachtet, gerade sowie zur radialen Richtung unter einem Winkel von 0° bis 20°, insbesondere von 5° bis 15, verläuft.

Bevorzugter Weise ist jede der zwei Profilrippen mit in die Umfangsrille einmündenden Querrillen versehen.

Gemäß einer weiteren bevorzugten Ausführung sind die Querrillen innerhalb der bzw. jeder Profilrippe breite Querrillen und gegenüber diesen zumindest abschnittsweise schmäler ausgeführte, einschnittartige Querrillen, wobei die Breite der breiten Querrillen 2,00 mm bis 10,0 mm, insbesondere 3,00 mm bis 8,00 mm, und die Breite der einschnittartigen Querrillen 0,40 mm bis 2,00 mm beträgt, wobei in Umfangsrichtung abwechselnd eine breite Querrille auf eine einschnittartige Querrille folgt und wobei die Breite der einschnittartigen Querrillen bevorzugt um zumindest 0,50 mm, insbesondere um zumindest 1,00 mm, geringer ist als die Breite der breiten Querrillen. Dies trägt zu einem günstigen Kompromiss zwischen der Entwässerung der Profilrippe und der steinabweisenden Wirkung der Vorsprünge bei.

Ferner ist es von Vorteil, wenn jeder Querrille der bzw. jeder Profilrippe jeweils einer der Vorsprünge zugeordnet ist. Dadurch ist der Schutz der Umfangsrille vor etwaigen eindringenden Steinen weiter verbessert.

Für die Entwässerung des Laufstreifens ist es von Vorteil, wenn die Querrillen die Profilrippe(n) durchqueren.

Gemäß einer vorteilhaften Ausgestaltung der letztgenannten bevorzugten Ausführung verleihen die breiten Querrillen den Profilrippen Rippenblöcke, welche jeweils mit einer der einschnittartigen Querrillen versehen sind, wobei jede Rippenkante im Bereich jedes Rippenblocks aus einem einzigen in die zugehörige Profilrippe in axialer Richtung hineingewölbten Rippenkantenabschnitt, zwei der aus der Profilrippe in axialer Richtung herausgewölbten Rippenkantenabschnitten und zwei in Draufsicht gerade verlaufenden, endseitigen Rippenkantenabschnitten zusammengesetzt ist, sodass die Umfangsrille aus in Draufsicht geschwungen wellenförmig verlaufenden Rillenabschnitten und gegenüber diesen kürzer ausgeführten, gerade verlaufenden Rillenabschnitten gebildet ist. Dies ist insbesondere für das Wasserdrainagevermögen der Umfangsrille günstig.

Gemäß einer weiteren bevorzugten Ausführung setzt sich jede Rippenwand, im in Draufsicht in axialer Richtung verlaufenden Querschnitt betrachtet, aus einer Flanke und einer zur Rippenkante verlaufenden Fase zusammen, wobei die Flanke und die Fase in einer in radialer Richtung ermittelten, konstanten Tiefe von 15% bis 30% der Profiltiefe aneinander anschließen, wobei die Flanke, im in Draufsicht senkrecht zur Rippenkante verlaufenden Querschnitt betrachtet, gerade sowie zur radialen Richtung unter einem insbesondere konstanten Winkel von 0° bis 3° verläuft und wobei die Fase, im in Draufsicht senkrecht zur Rippenkante verlaufenden Querschnitt betrachtet, als gerade Linie erscheint, welche zur radialen Richtung unter einem Winkel von 5° bis 55°, insbesondere von bis zu 50°, verläuft, wobei sich der Winkel der Fase ausgehend von den maximal ausgebuchteten Stellen der herausgewölbten Rippenkantenabschnitte zu maximal eingebuchteten Stellen von an den herausgewölbten Rippenkantenabschnitt anschließenden, hineingewölbten Rippenkantenabschnitte fortlaufend zunimmt, wobei die Vorsprünge an den Flanken angebunden und zu den Fase in radialer Richtung beabstandet sind. Eine solche Fase sorgt für eine im Hinblick auf das Wasserdrainagevermögen der Umfangsrille besonders günstige, lokale Querschnittserweiterung der Umfangsrille im Bereich radial außerhalb des Vorsprungs, sodass die mit dem Vorsprung einhergehende Querschnittsreduktion auf äußerst vorteilhafte Weise ausgeglichen ist.

Dabei ist es von zusätzlichem Vorteil, wenn der größte Wert des Winkels der gekrümmten Fase, welcher an den maximal eingebuchteten Stellen vorliegt, zumindest 15° und der kleinste Wert des Winkels der gekrümmten Fase, welcher an den maximal eingebuchteten Stellen vorliegt, höchstens 10° beträgt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Ausschnitt eines Laufstreifens eines Nutzfahrzeugreifens mit einer Ausführungsvariante der Erfindung,
Fig. 2 eine vergrößerte Draufsicht auf das Detail Z₂ der Fig. 1,
Fig. 3 einen verkleinerten Schnitt entlang der Linie **III-III** der Fig. 2,
Fig. 4 eine vergrößerte Ansicht des Details Z₄ der Fig. 3,
Fig. 5 einen vergrößerten perspektivischen Schnitt entlang der Linie V-V der Fig. 2,
Fig. 6 eine vergrößerte Draufsicht auf das Detail Z₆ der Fig. 1 und
Fig. 7 einen verkleinerten, perspektivischen Schnitt entlang der Linie VII-VII der Fig. 6.

Gemäß der Erfindung ausgeführte Nutzfahrzeugreifen sind Reifen für mehrspurige Kraftfahrzeuge, insbesondere für Busse oder Lastkraftwagen, sowie vorzugsweise Reifen in Radialbauart für Felgen mit einem Felgendurchmesser von 17,5, 19,5 oder 22,5 Zoll.

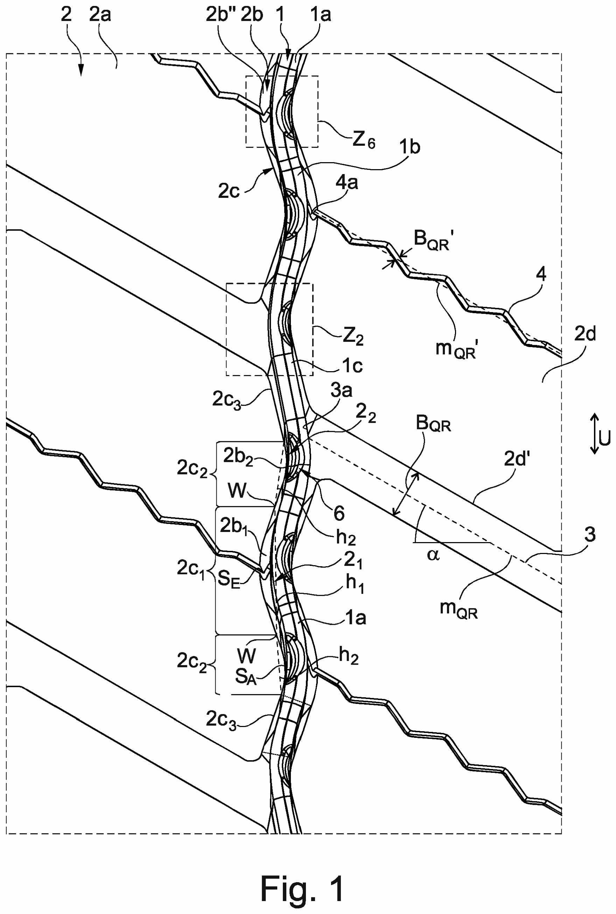

Fig. 1 zeigt eine Draufsicht auf einen mittleren Ausschnitt eines Laufstreifens eines Nutzfahrzeugreifens. Die Umfangsrichtung U ist durch einen Doppelpfeil angedeutet. Der Laufstreifen weist im gezeigten Ausschnitt eine mittlere Umfangsrille 1 auf, welche zwei mittlere Profilrippen 2, von welchen lediglich Teilbereiche zu sehen sind, voneinander trennt.

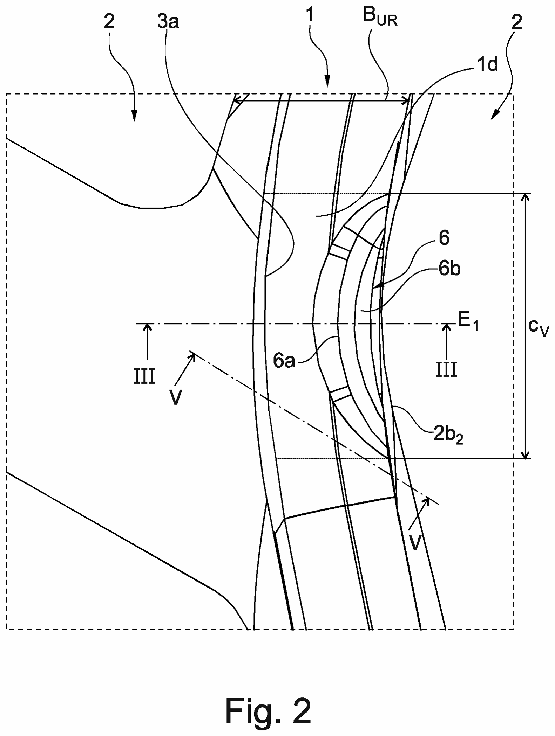

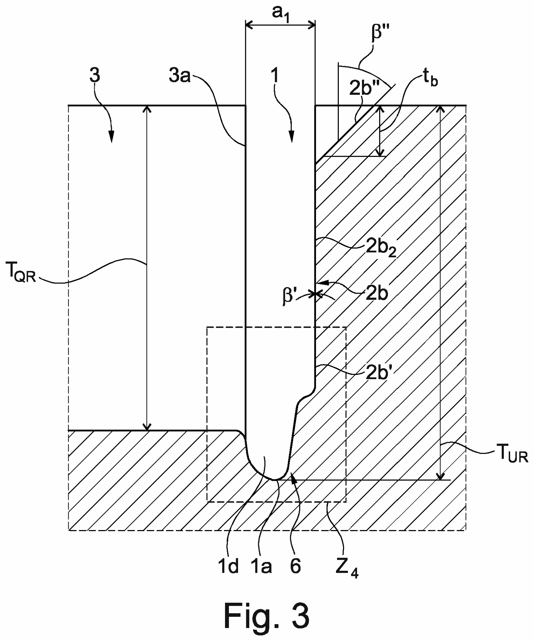

Die mittlere Umfangsrille 1 verläuft, in Draufsicht betrachtet, in Form einer Welle, ist in radialer Richtung an ihrer tiefsten Stelle auf die jeweils vorgesehene Profiltiefe T_{UR} (Fig. 3) von insbesondere 8,00 mm bis 26,00 mm, vorzugsweise von zumindest 12,00 mm, ausgeführt, weist, in Draufsicht betrachtet, eine an der Laufstreifenperipherie zwischen den mittleren Profilrippen 2 in axialer Richtung gemessene Breite B_{UR} (Fig. 2) von 2,00 mm bis 20,00 mm, insbesondere von 5,00 mm bis 15,00 mm, auf und ist in radialer Richtung durch einen, im in axialer Richtung verlaufenden Querschnitt durchgehend U-förmig gerundet verlaufenden Rillengrund 1a begrenzt, sodass der Rillengrund 1a, im erwähnten Querschnitt betrachtet, wendepunktfrei verläuft. Bevorzugt beträgt die Breite B_{UR} höchstens 40%, insbesondere höchstens 35%, besonders bevorzugt höchstens 20%, der Profiltiefe T_{UR}.

Jede Profilrippe 2 weist eine in der Laufstreifenperipherie liegende Rippenaußenfläche 2a, eine an der Umfangsrille 1 liegende, zum Rillengrund 1a verlaufende Rippenwand 2b und eine an der Laufstreifenperipherie sowie entlang der Umfangsrille 1 verlaufende, zwischen der Rippenaußenfläche 2a und der Rippenwand 2b ausgebildete Rippenkante 2c auf. Die erwähnte Breite B_{UR} der Umfangsrille 1 ist zwischen den Rippenkanten 2c ermittelt, wobei die Breite B_{UR} bei sich über die Rillenerstreckung verändernder Breite B_{UR} an der bzw. einer der breitesten Stelle(n) ermittelt ist.

Jede Profilrippe 2 weist - bedingt durch die Wellenform der Umfangsrille 1 - entlang der Umfangsrille 1 ausgebildete Rippeneinbuchtungen 2₁ und Rippenausbuchtungen 2₂ auf. Jede Rippeneinbuchtung 2₁ ist an der Rippenaußenfläche 2a der zugehörigen Profilrippe 2 von einem in Draufsicht durchgehend gebogen verlaufenden, in die zugehörige Profilrippe 2 in axialer Richtung hineingewölbten Rippenkantenabschnitt 2c₁ der Rippenkante 2c und jede Rippenausbuchtung 2₂ ist an der Rippenaußenfläche 2a von einem in Draufsicht durchgehend gebogen verlaufenden, aus der zugehörigen Profilrippe 2 in axialer Richtung herausgewölbten Rippenkantenabschnitt 2c₂ begrenzt. Die Rippenkante 2c weist an jedem gegenseitigen Anschluss eines hineingewölbten Rippenkantenabschnitts 2c₁ an einen herausgewölbten Rippenkantenabschnitt 2c₂ einen Wendepunkt W auf. Bei jedem hineingewölbten Rippenkantenabschnitt 2c₁ befindet sich eine in Draufsicht gerade sowie zwischen den Enden des Rippenkantenabschnitts 2c₁ verlaufende Hilfslinie h₁ innerhalb der Umfangsrille 1 und bei jedem herausgewölbten Rippenkantenabschnitt 2c₂ befindet sich eine in Draufsicht gerade sowie zwischen den Enden des Rippenkantenabschnitts 2c₂ verlaufende Hilfslinie h₂ auf der Rippenaußenfläche 2a. Jeder hineingewölbte Rippenkantenabschnitt 2c₁ weist eine gegenüber der Hilfslinie h₁ in axialer Richtung am weitesten beabstandete, maximal eingebuchtete Stelle S_{E} und jeder herausgewölbte Rippenkantenabschnitt 2c₂ weist eine gegenüber der Hilfslinie h₂ in axialer Richtung am weitesten beabstandete, maximal ausgebuchtete Stelle S_{A} auf.

Die Profilrippen 2 sind jeweils mit einer Anzahl von in Umfangsrichtung aufeinanderfolgenden, die Profilrippe 2 durchquerenden, in Fig. 1 vereinfacht dargestellten Querrillen 3 versehen, welche jeweils an einer Rippeneinbuchtung 2₁ in die Umfangsrille 1 einmünden, daher eine gegenüberliegend zu einer Rippenausbuchtung 2₂ befindliche Rillenmündung 3a aufweisen, wobei ausschließlich an jeder zweiten Rippeneinbuchtung 2₁ jeder Profilrippe 2 eine Querrille 3 austritt und wobei die Querrillen 3 in der einen Profilrippe 2 derart relativ zu den Querrillen 3 aus der jeweils anderen Profilrippe 2 in Umfangsrichtung (Doppelpfeil U) versetzt sind, dass die Querrillen 3 an in Umfangsrichtung direkt aufeinanderfolgenden, zu den verschiedenen Profilrippen 2 gehörenden Rippeneinbuchtungen 2₁ austreten. Die Profilrippen 2 weisen durch die Querrillen 3 voneinander getrennte Rippenblöcke 2d auf, wobei die Rippenblöcke 2d der einen Profilrippe 2 zu den Rippenblöcken 2d der anderen Profilrippe 2 - analog zu den Querrillen 3 - in Umfangsrichtung versetzt sind.

Die Querrillen 3 sind an der jeweiligen Rippenaußenfläche 2a jeweils durch zwei in Draufsicht gerade und parallel zueinander verlaufende Blockkanten 2d' der angrenzenden Rippenblöcke 2d begrenzt, weisen eine in Draufsicht übereinstimmend zu den Blockkanten 2d' beabstandete, in ihrer Haupterstreckungsrichtung (Längserstreckungsrichtung) ausgerichtete, gerade verlaufende Rillenmittellinie m_{QR}, eine senkrecht zur Rillenmittellinie m_{QR} zwischen den Blockkanten 2d' ermittelte konstante Breite B_{QR} von 2,00 mm bis 10,00 mm, insbesondere von 3,00 mm bis 8,00 mm, und in radialer Richtung eine maximale Tiefe T_{QR} (Fig. 3, Tiefe an der tiefsten Stelle) von 60% bis 100%, insbesondere von 80% bis 90%, der Profiltiefe T_{UR} (Fig. 3) auf und verlaufen, ebenfalls in Draufsicht betrachtet und bezogen auf die Rillenmittellinien m_{QR}, innerhalb der jeweiligen Profilrippe 2 parallel zueinander sowie zur axialen Richtung unter einem Winkel α von 0° bis 45°, insbesondere von zumindest 15°, bevorzugt von 27,0° bis 40,0°, wobei die Querrillen 3 beim Ausführungsbeispiel unter einem von 0° abweichenden Winkel α verlaufen und die in der einen Profilrippe 2 befindlichen Querrillen 3 zu den in der anderen Profilrippe 2 befindlichen Querrillen 3 bezüglich der Umfangsrichtung gleichsinnig geneigt sind. Alternativ können die Querrillen 3 aus der einen Profilrippe 2 bezüglich der Umfangsrichtung gegensinnig zu den Querrillen 3 aus der anderen Profilrippe 2 geneigt sein.

Jeder Rippenblock 2d weist an der Umfangsrille 1 - entsprechend der Anzahl und der Position der Querrillen 3 - einen einzigen, hineingewölbten Rippenkantenabschnitt 2c₁ und zwei herausgewölbte Rippenkantenabschnitte 2c₂ auf. Beim Ausführungsbeispiel setzt sich jede Rippenkante 2c im Bereich eines Rippenblocks 2d aus dem entsprechenden, hineingewölbten Rippenkantenabschnitt 2c₁, den zwei an diesen anschließenden, herausgewölbten Rippenkantenabschnitten 2c₂ und zwei in Draufsicht gerade verlaufenden, endseitigen Rippenkantenabschnitten 2c₃ zusammen.

Die Umfangsrille 1 setzt sich - entsprechend der Rippenkantenabschnitte 2c₁, 2c₂, 2c₃ - in Draufsicht betrachtet, aus wellenförmig verlaufenden Rillenabschnitten 1b, welche jeweils über die hinein- bzw. herausgewölbten Rippenkantenabschnitten 2c₁, 2c₂ reichen, und gegenüber den Rillenabschnitten 1b in Umfangsrichtung kürzer ausgeführten, gerade sowie zur Umfangsrichtung geneigt verlaufenden Rillenabschnitten 1c zusammen. Die Rillenabschnitte 1c befinden sich jeweils im Bereich zwischen jenen beiden Querrillen 3, die an in Umfangsrichtung direkt aufeinanderfolgenden, zu den verschiedenen Profilrippen 2 gehörenden Rippeneinbuchtungen 2₁ austreten und sind im Bereich zweier axial gegenüberliegender, endseitiger Rippenkantenabschnitte 2c₃ ausgebildet. In Umfangsrichtung folgt abwechselnd ein Rillenabschnitt 1b auf einen Rillenabschnitt 1c.

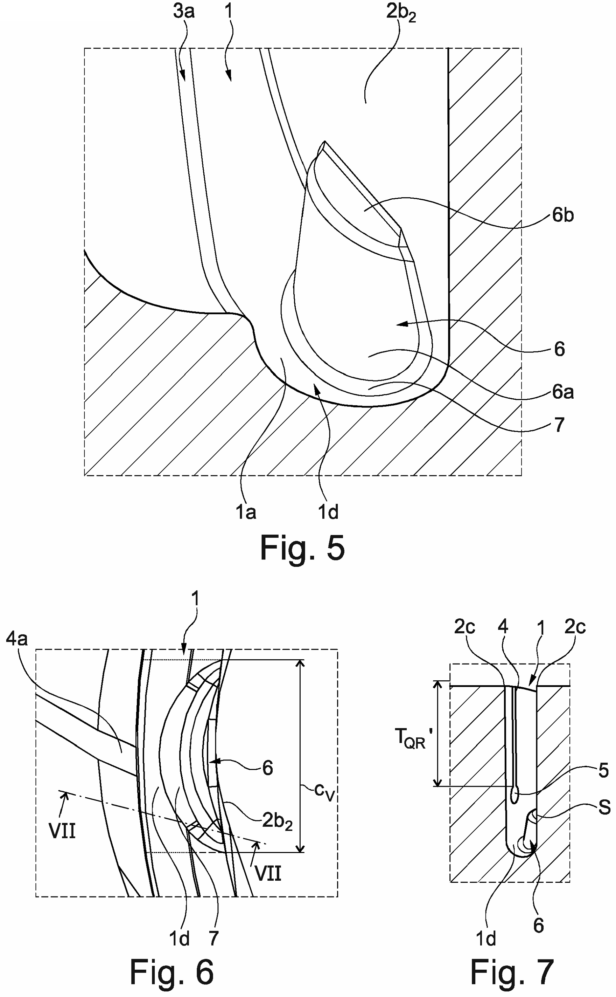

Jeder Rippenblock 2d ist mit jeweils genau einer den Rippenblock 2d durchquerenden, einschnittartigen Querrille 4 versehen, welche jeweils an der Rippeneinbuchtung 2₁ des jeweiligen Rippenblocks 2d in die Umfangsrille 1 einmündet, daher eine gegenüberliegend zu einer Rippenausbuchtung 2₂ befindliche Rillenmündung 4a aufweist und den hineingewölbten Rippenkantenabschnitt 2c₁ im Bereich seiner maximal eingebuchteten Stelle S_{E} ausspart und diesen somit zweiteilt. Die einschnittartige Querrille 4 verläuft beim Ausführungsbeispiel, in Draufsicht betrachtet, abschnittsweise wellenförmig, weist eine in Draufsicht gerade verlaufende, in ihrer Haupterstreckungsrichtung (Längserstreckungsrichtung) ausgerichtete Rillenmittellinie m_{QR}', eine an der Rippenaußenfläche 2a senkrecht zur lokalen Erstreckung ermittelte konstante Breite B_{QR}' von 0,40 mm bis 2,00 mm und in radialer Richtung eine maximale Tiefe T_{QR}' (Fig. 7, Tiefe an der tiefsten Stelle) von 60% bis 100%, insbesondere von 70% bis 90%, der Profiltiefe T_{UR} (Fig. 3) auf und verläuft ferner, ebenfalls in Draufsicht betrachtet und bezogen auf die Rillenmittellinien m_{QR}, m_{QR}', parallel zu den Querrillen 3 der jeweiligen Profilrippe 2. Die Breite B_{QR}' der einschnittartigen Querrillen 4 ist dabei um zumindest 0,50 mm, insbesondere um zumindest 1,00 mm, geringer als die Breite B_{QR} der Querrillen 3. Beim Ausführungsbeispiel reichen die einschnittartigen Querrillen 4 jeweils über ihre gesamte entlang der Rillenmittellinie m_{QR}' vorliegende Erstreckung in die maximale Tiefe T_{QR}' und münden über ihre gesamte Erstreckung in einen rohrförmigen Kanal 5 ein (Fig. 7), welcher die jeweilige einschnittartige Querrille 4 beidseitig überragt.

Jede Rippeneinbuchtung 2₁ ist an der Umfangsrille 1 durch einen an den hineingewölbten Rippenkantenabschnitt 2c₁ anschließenden, in Draufsicht durchgehend nach innen gewölbten Rippenwandabschnitt 2b₁ der Rippenwand 2b und jede Rippenausbuchtung 2₂ ist an der Umfangsrille 1 durch einen an den herausgewölbten Rippenkantenabschnitt 2c₂ anschließenden, in Draufsicht durchgehend nach außen gewölbten Rippenwandabschnitt 2b₂ der Rippenwand 2b begrenzt. Folglich befinden sich die Rillenmündungen 3a, 4a der Querrillen 3, 4 jeweils gegenüberliegend zu einem in Draufsicht durchgehend nach außen gewölbten Rippenwandabschnitt 2b₂.

Gemäß Fig. 3 sind die Rippenwände 2b, im in Draufsicht in axialer Richtung ausgerichteten Querschnitt betrachtet, derart gestaltet, dass ein zwischen den Rippenwänden 2b parallel zur Laufstreifenperipherie ermittelter, in Richtung Rillengrund 1a nicht zunehmender, gegenseitiger Abstand a₁ vorliegt. Beim gezeigten Ausführungsbeispiel setzt sich jede Rippenwand 2b und damit auch jeder Rippenwandabschnitt 2b₁, 2b₂, im in Draufsicht in axialer Richtung verlaufenden Querschnitt betrachtet, aus einer Flanke 2b' und einer zur Rippenkante 2c verlaufenden Fase 2b" (vergl. Fig. 1) zusammen, wobei die Flanke 2b' und die Fase 2b" in einer in radialer Richtung ermittelten, konstanten Tiefe t_{b} von 15% bis 30% der Profiltiefe T_{UR} aneinander anschließen. Die Flanke 2b' verläuft, im in Draufsicht senkrecht zur Rippenkante 2c verlaufenden Querschnitt betrachtet, gerade sowie zur radialen Richtung unter einem insbesondere konstanten Winkel β' von 0° bis 3°. "In Draufsicht senkrecht zur Rippenkante 2c " bedeutet senkrecht zu einer an die jeweilige Stelle der Rippenkante 2c angelegte Tangente. Die Fase 2b" erscheint, im in Draufsicht senkrecht zur Rippenkante 2c verlaufenden Querschnitt betrachtet, als gerade Linie, welche zur radialen Richtung unter einem Winkel β" von 5° bis 55°, insbesondere von bis zu 50°, verläuft, wobei der Winkel β" - wie Fig. 1 zu nehmen ist - ausgehend von den maximal ausgebuchteten Stellen S_{A} der herausgewölbten Rippenkantenabschnitte 2c₂ zur maximal eingebuchteten Stellen S_{E} des hineingewölbten Rippenkantenabschnitts 2c₁ sowie ausgehend von den maximal ausgebuchteten Stellen S_{A} der herausgewölbten Rippenkantenabschnitte 2c₂ zu den diesen abgewandten Enden der endseitigen Rippenkantenabschnitte 2c₃ fortlaufend zunimmt. Der größte Wert des Winkels β", welcher zumindest an der maximal eingebuchteten Stellen S_{E} vorliegt, beträgt insbesondere zumindest 15° und der kleinste Wert des Winkels β", welcher an den maximal ausgebuchteten Stellen S_{A} vorliegt, beträgt insbesondere höchstens 10°.

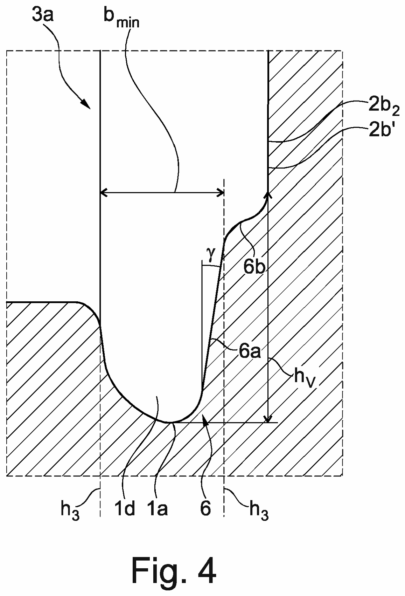

Wie Fig. 1 ferner zeigt, sind in der Umfangsrille 1 am Rillengrund 1a aufsitzende, je einer Querrille 3, 4 zugeordnete, in Draufsicht kreissegmentförmige, zu den Rippenkanten 2c beabstandete (Fig. 7) Vorsprünge 6 ausgebildet, wobei jeder Querrille 3, 4 jeweils ein einziger Vorsprung 6 zugeordnet ist. Die Vorsprünge 6 sind jeweils an dem der jeweiligen Rillenmündung 3a, 4a gegenüberliegenden Rippenwandabschnitt 2b₂, beim gezeigten Ausführungsbeispiel ausschließlich im Bereich der Flanke 2b' des Rippenwandabschnitts 2b₂, angebunden (vergl. Fig. 3, Fig. 5), wobei gemäß Fig. 2 bis Fig. 7 von der Umfangsrille 1 eine seitlich des Vorsprungs 6 verlaufende, in Draufsicht (Fig. 2, Fig. 6) an die Rillenmündung 3a, 4a angrenzende, radial innere Rillenverengung 1d (in Fig. 2 und Fig. 6 punktiert angedeutet) verbleibt. Die Vorsprünge 6 sind daher zur gekrümmten Fase 2b" in radialer Richtung beabstandet. Gemäß Fig. 2 weisen die Vorsprünge 6 jeweils eine in radialer Richtung ausgerichtete, in Draufsicht in axialer Richtung verlaufende Symmetrieebene E₁ auf, sind entlang der Rillenverengung 1d durch eine in Draufsicht durchgehend nach außen gewölbte Vorsprungflanke 6a (vergl. Fig. 5) sowie in radialer Richtung durch eine Deckfläche 6b (vergl. Fig. 5) begrenzt. Wie Fig. 4 zeigt, verläuft die Vorsprungflanke 6a, im entlang der Symmetrieebene E₁ ausgerichteten Querschnitt betrachtet (vergl. Lage der Linie III-III in Fig. 2), gerade sowie zur radialen Richtung unter einem Winkel γ von 0° bis 20°, insbesondere von 5° bis 15°. Die Deckfläche 6b verläuft, im entlang der Symmetrieebene E₁ ausgerichteten Querschnitt betrachtet, S-förmig geschwungen, nähert sich mit zunehmender Entfernung vom Rippenwandabschnitt 2b₂, beim gezeigten Ausführungsbeispiel somit auch mit zunehmender Entfernung von der Flanke 2b', in radialer Richtung dem Rillengrund 1a an und schließt tangential an die Vorsprungflanke 6a und tangential an den Rippenwandabschnitt 2b₂ an. Gemäß Fig. 5 ist die Vorsprungflanke 6a beim gezeigten Ausführungsbeispiel von einer an den Rillengrund 1a anschließenden, entlang des Rippenwandabschnitts 2b₂ bis zur Deckfläche 6b reichenden, U-förmig verlaufenden Übergangsrundung 7 (vergl. Fig. 6) umgeben. Die radial innere Rillenverengung 1d ist daher vom Rillengrund 1a und der Vorsprungflanke 6a mitbegrenzt.

Der Vorsprung 6 weist eine gegenüber dem Niveau der Profiltiefe T_{UR} (vergl. Fig. 3) am Rippenwandabschnitt 2b₂ vorliegende, in radialer Richtung ermittelte maximale Höhe hv (Höhe an der höchsten Stelle, Fig. 4) von 20% bis 50%, insbesondere von 25% bis 40%, der Profiltiefe T_{UR} (Fig. 3) und - wie Fig. 2 und Fig. 6 zeigen - eine in Draufsicht in Umfangsrichtung ermittelte, am Rippenwandabschnitt 2b₂ vorliegende, maximale Länge c_{V} (Länge an der längsten Stelle) von 3,00 mm bis 8,00 mm, insbesondere von 4,00 mm bis 7,00 mm, auf.

Gemäß Fig. 4 weist die Rillenverengung 1d, im entlang der Symmetrieebene E₁ ausgerichteten Querschnitt betrachtet (vergl. Lage der Linie III-III in Fig. 2), ihre kleinste Querschnittsfläche und ihre kleinste Breite bₘᵢₙ (Breite an der schmälsten Stelle) auf, wobei die kleinste Breite bₘᵢₙ 25% bis 65%, insbesondere 35% bis 55%, der Breite B_{UR} (Fig. 2) der Umfangsrille 1 beträgt und wobei die kleinste Breite bₘᵢₙ parallel zur Laufstreifenperipherie sowie zwischen zwei in radialer Richtung verlaufenden Hilfslinien h₃ ermittelt ist, von welchen die eine durch das radial äußere Ende der Vorsprungflanke 6a und die andere durch das der Vorsprungflanke 6a abgewandte, der jeweiligen Rillenmündung 3a, 4a zugewandte, radial äußere Ende des Rillengrunds 1a verläuft (gezeigt für Rillenmündung 3a).

Die Erfindung ist auf das beschriebene Ausführungsbeispiel nicht beschränkt.

Die Umfangsrille mit den Vorsprüngen kann eine schulterseitige Umfangsrille sein. Die Umfangsrillen können in Draufsicht einen vom beschriebenen Verlauf abweichenden Verlauf aufweisen. Die Profilrippen können jeweils ausschließlich mit Querrillen oder ausschließlich mit einschnittartigen Querrillen versehen sein. Die einschnittartigen Querrillen und die Querrillen münden in die Umfangsrille ein und können mit ihrem anderen Ende innerhalb der Profilrippe geschlossen enden. Es ist zumindest eine der Profilrippen mit Querrillen versehen. Die Querrillen können, in Draufsicht betrachtet, unabhängig voneinander beispielsweise gerade oder wellenförmig verlaufen. Die Kanäle, in welche die Einschnitte einmünden, sind optional, sodass die Einschnitte einen herkömmlichen Einschnittgrund aufweisen können. Die Rippenwände können frei von gekrümmten Fasen sein, sodass die Rippenwände ausschließlich aus den Flanken gebildet sind, wobei die Flanken bis den Rippenkanten reichen.

### Bezugszeichenliste

- 1: mittlere Umfangsrille
- 1a: Rillengrund
- 1b: Rillenabschnitt
- 1c: Rillenabschnitt
- 1d: radial innere Rillenverengung
- 2: mittlere Profilrippe
- 2₁: Rippeneinbuchtung
- 2₂: Rippenausbuchtung
- 2a: Rippenaußenfläche
- 2b: Rippenwand
- 2b₁: Rippenwandabschnitt
- 2b₂: Rippenwandabschnitt
- 2b': Flanke
- 2b": gekrümmte Fase
- 2c: Rippenkante
- 2c₁: hineingewölbter Rippenkantenabschnitt
- 2c₂: herausgewölbter Rippenkantenabschnitt
- 2c₃: endseitiger Rippenkantenabschnitt
- 2d: Rippenblock
- 2d': Blockkante
- 3: Querrille
- 3a: Rillenmündung
- 4: einschnittartige Querrille
- 4a: Rillenmündung
- 5: Kanal
- 6: Vorsprung
- 6a: Vorsprungflanke
- 6b: Deckfläche
- 7: Übergangsrundung
- a₁: Abstand
- bₘᵢₙ: kleinste Breite
- B_{QR}, B_{QR}', B_{UR}: Breite
- cv: maximale Länge
- E₁: Symmetrieebene
- h₁, h₂, h₃: Hilfslinie
- hv: maximale Höhe
- m_{QR}, m_{QR}': Rillenmittellinie
- S_{A}: maximal ausgebuchtete Stelle
- S_{E}: maximal eingebuchtete Stelle
- t_{b}: Tiefe
- T_{QR}, T_{QR}': maximale Tiefe
- T_{UR}: Profiltiefe
- U: Doppelpfeil (Umfangsrichtung)
- W: Wendepunkt
- Z₂, Z₄, Z₆: Detail
- α, β', β", γ: Winkel

## Patentansprüche

1. Nutzfahrzeugreifen mit einem Laufstreifen mit zwei, durch eine die Profiltiefe (T_{UR}) und einen Rillengrund (1a) aufweisenden Umfangsrille (1) voneinander getrennten Profilrippen (2), welche an der Umfangsrille (1) je eine Rippenkante (2c) und eine an diese anschließende Rippenwand (2b) aufweisen, wobei zwischen den Rippenwänden (2b), im in Draufsicht in axialer Richtung ausgerichteten Querschnitt betrachtet, ein parallel zur Laufstreifenperipherie ermittelter, in Richtung Rillengrund (1a) nicht zunehmender, gegenseitiger Abstand (a₁) vorliegt,
wobei zumindest eine Profilrippe (2) mit in die Umfangsrille (1) einmündenden Querrillen (3, 4) mit einer Breite (B_{QR}, B_{QR}') von 0,40 mm bis 10,00 mm, einer maximalen Tiefe (T_{QR}, T_{QR}') von 60% bis 100% der Profiltiefe (T_{UR}) und einer an der Umfangsrille (1) liegenden Rillenmündung (3a, 4a) versehen ist,
wobei am Rillengrund (1a) der Umfangsrille (1) zu den Rippenkanten (2c) beabstandete, je einer Querrille (3, 4) zugeordnete und an der der Rillenmündung (3a, 4a) der Querrille (3, 4) gegenüberliegenden Rippenwand (2b) angebundene, in Draufsicht kreissegmentförmige Vorsprünge (6) mit je einer durchgehend nach außen gewölbten Vorsprungflanke (6a) und je einer in Draufsicht in axialer Richtung verlaufenden Symmetrieebene (E₁)ausgebildet sind, wobei der Vorsprung (6) in radialer Richtung durch eine Deckfläche (6b) begrenzt ist und wobei die Umfangsrille (1) seitlich jedes Vorsprungs (6) jeweils eine von ihrem Rillengrund (1a) und der Vorsprungflanke (6a) mitbegrenzte radial innere Rillenverengung (1d) aufweist,
**dadurch gekennzeichnet,**
**dass** die Deckfläche (6b), im entlang der Symmetrieebene (E₁) ausgerichteten Querschnitt betrachtet, S-förmig geschwungen verläuft, sich mit zunehmender Entfernung von der Rippenwand (2b) dem Rillengrund (1a) in radialer Richtung annähert und tangential an die Vorsprungflanke (6a) sowie tangential an die Rippenwand (2b) anschließt.

2. Nutzfahrzeugreifen nach Anspruch 1, **dadurch gekennzeichnet, dass** die Umfangsrille (1), in Draufsicht betrachtet, in Form einer Welle verläuft und den Profilrippen (2) einander durch die Umfangsrille (1) getrennte Rippeneinbuchtungen (2₁) und Rippenausbuchtungen (2₂) verleiht, wobei jede Rippenausbuchtung (2₂) an der Rippenaußenfläche (2a) von einem durchgehend gebogen verlaufenden, aus der Profilrippe (2) in axialer Richtung herausgewölbten Rippenkantenabschnitt (2c₂) begrenzt ist und einen an diesen anschließenden Rippenwandabschnitt (2b₂) aufweist,
wobei sich die Rillenmündungen (3a, 4a) der Querrillen (3, 4) jeweils gegenüberliegend zu einem an einen herausgewölbten Rippenkantenabschnitt (2c₂) anschließenden Rippenwandabschnitt (2b₂) befinden und die Vorsprünge (6) an diese Rippenwandabschnitte (2b₂) angebunden sind.

3. Nutzfahrzeugreifen nach Anspruch 1 oder 2, **dadurch gekennzeichnet, dass** die radial innere Rillenverengung (1d), im in Draufsicht in axialer Richtung verlaufenden Querschnitt betrachtet, an ihre schmälsten Stelle eine Breite (bₘᵢₙ) von 25% bis 65%, insbesondere von 35% bis 55%, der in Draufsicht in axialer Richtung zwischen den Rippenkanten (2c) ermittelten Breite (B_{UR}) der Umfangsrille (1) aufweist, wobei die Breite (bₘᵢₙ) der Rillenverengung (1d) zwischen zwei in radialer Richtung verlaufenden Hilfslinien (h₃) ermittelt ist, von welchen die eine durch das radial äußere Ende der Vorsprungflanke (6a) und die andere durch das der Vorsprungflanke (6a) abgewandte, der jeweiligen Rillenmündung (3a, 4a) zugewandte Ende des Rillengrunds (1a) verläuft.

4. Nutzfahrzeugreifen nach einem der Ansprüche 1 bis 3, **dadurch gekennzeichnet, dass**
der Vorsprung (6), im in Draufsicht in axialer Richtung verlaufenden Querschnitt betrachtet, eine gegenüber dem Niveau der Profiltiefe (T_{UR}) in radialer Richtung ermittelte, maximale Höhe (hv) von 20% bis 50%, insbesondere von 25% bis 40%, der Profiltiefe (T_{UR}) aufweist,
und/oder
dass der Vorsprung (6) eine in Draufsicht in Umfangsrichtung ermittelte, maximale Länge (cv) von 3,00 mm bis 8,00 mm, insbesondere von 4,00 mm bis 7,00 mm, aufweist.

5. Nutzfahrzeugreifen nach Anspruch 2 und 4, **dadurch gekennzeichnet, dass** die maximale Höhe (h_{V}) des Vorsprungs (6) zumindest am Rippenwandabschnitt (2b₂) vorliegt.

6. Nutzfahrzeugreifen nach einem der Ansprüche 1 bis 5, **dadurch gekennzeichnet, dass** die Vorsprungflanke (6a), im entlang der Symmetrieebene (E₁) ausgerichteten Querschnitt betrachtet, gerade sowie zur radialen Richtung unter einem Winkel (γ) von 0° bis 20°, insbesondere von 5° bis 15, verläuft.

7. Nutzfahrzeugreifen nach einem der Ansprüche 1 bis 6, **dadurch gekennzeichnet, dass** jede der zwei Profilrippen (2) mit in die Umfangsrille (1) einmündenden Querrillen (3, 4) versehen ist.

8. Nutzfahrzeugreifen nach einem der Ansprüche 1 bis 7, **dadurch gekennzeichnet, dass** die Querrillen (3, 4) innerhalb der bzw. jeder Profilrippe (2) breite Querrillen (3) und gegenüber diesen zumindest abschnittsweise schmäler ausgeführte, einschnittartige Querrillen (4) sind, wobei die Breite (B_{QR}) der breiten Querrillen (3) 2,00 mm bis 10,0 mm, insbesondere 3,00 mm bis 8,00 mm, und die Breite (B_{QR}') der einschnittartigen Querrillen (4) 0,40 mm bis 2,00 mm beträgt, wobei in Umfangsrichtung abwechselnd eine breite Querrille (3) auf eine einschnittartige Querrille (4) folgt und wobei die Breite (B_{QR}') der einschnittartigen Querrillen (4) bevorzugt um zumindest 0,50 mm, insbesondere um zumindest 1,00 mm, geringer ist als die Breite (B_{QR}) der breiten Querrillen (3).

9. Nutzfahrzeugreifen nach einem der Ansprüche 1 bis 8, **dadurch gekennzeichnet, dass** jeder Querrille (3, 4) der bzw. jeder Profilrippe (2) jeweils einer der Vorsprünge (6) zugeordnet ist.

10. Nutzfahrzeugreifen nach einem der Ansprüche 1 bis 9, **dadurch gekennzeichnet, dass** die Querrillen (3, 4) die Profilrippe(n) (2) durchqueren.

11. Nutzfahrzeugreifen nach Anspruch 7, 8 und 10, **dadurch gekennzeichnet, dass** die breiten Querrillen (3) den Profilrippen (2) Rippenblöcke (2d) verleihen, welche jeweils mit einer der einschnittartigen Querrillen (4) versehen sind, wobei jede Rippenkante (2c) im Bereich jedes Rippenblocks (2d) aus einem einzigen in die zugehörige Profilrippe (2) in axialer Richtung hineingewölbten Rippenkantenabschnitt (2c₁), zwei aus der Profilrippe (2) in axialer Richtung herausgewölbten Rippenkantenabschnitten (2c₂) und zwei in Draufsicht gerade verlaufenden, endseitigen Rippenkantenabschnitten (2c₃) zusammengesetzt ist, sodass die Umfangsrille (1) aus in Draufsicht geschwungen wellenförmig verlaufenden Rillenabschnitten (1b) und gegenüber diesen kürzer ausgeführten, gerade verlaufenden Rillenabschnitten (1c) gebildet ist.

12. Nutzfahrzeugreifen nach einem der Ansprüche 2 bis 11, **dadurch gekennzeichnet, dass** sich jede Rippenwand (2b), im in Draufsicht in axialer Richtung verlaufenden Querschnitt betrachtet, aus einer Flanke (2b') und einer zur Rippenkante (2c) verlaufenden Fase (2b") zusammensetzt, wobei die Flanke (2b') und die Fase (2b") in einer in radialer Richtung ermittelten, konstanten Tiefe (t_{b}) von 15% bis 30% der Profiltiefe (T_{UR}) aneinander anschließen, wobei die Flanke (2b'), im in Draufsicht senkrecht zur Rippenkante (2c) verlaufenden Querschnitt betrachtet, gerade sowie zur radialen Richtung unter einem insbesondere konstanten Winkel (β') von 0° bis 3° verläuft und wobei die Fase (2b"), im in Draufsicht senkrecht zur Rippenkante (2c) verlaufenden Querschnitt betrachtet, als gerade Linie erscheint, welche zur radialen Richtung unter einem Winkel (β") von 5° bis 55°, insbesondere von bis zu 50°, verläuft, wobei sich der Winkel (β") der Fase (2b") ausgehend von den maximal ausgebuchteten Stellen (S_{A}) der herausgewölbten Rippenkantenabschnitte (2c₂) zu maximal eingebuchteten Stellen (S_{E}) von an den herausgewölbten Rippenkantenabschnitt (2c₂) anschließenden, hineingewölbten Rippenkantenabschnitten (2c₁) fortlaufend zunimmt, wobei die Vorsprünge (6) an den Flanken (2b') angebunden und zu den Fase (2b") in radialer Richtung beabstandet sind.

13. Nutzfahrzeugreifen nach Anspruch 12, **dadurch gekennzeichnet, dass** der größte Wert des Winkels (β") der gekrümmten Fase (2b"), welcher an den maximal eingebuchteten Stellen (S_{E}) vorliegt, zumindest 15° und der kleinste Wert des Winkels (β") der gekrümmten Fase (2b"), welcher an den maximal eingebuchteten Stellen (S_{E}) vorliegt, höchstens 10° beträgt.

## Claims

1. Commercial vehicle tyre having a tread with two profile ribs (2), which are separated from one another by a circumferential groove (1) having the profile depth (T_{UR}) and a groove base (1a) and which each have a rib edge (2c) at the circumferential groove (1) and a rib wall (2b) adjoining said rib edge, wherein, when seen in the cross section oriented in the axial direction in plan view, there is between the rib walls (2b) a mutual distance (a₁), which is determined parallel to the periphery of the tread and does not increase in the direction of the groove base (1a),
wherein at least one profile rib (2) is provided with transverse grooves (3, 4) opening out into the circumferential groove (1) and having a width (B_{QR}, B_{QR}') of 0.40 mm to 10.00 mm, a maximum depth (T_{QR}, T_{QR}') of 60% to 100% of the profile depth (T_{UR}) and a groove mouth (3a, 4a) lying at the circumferential groove (1),
wherein, on the groove base (1a) of the circumferential groove (1), projections (6) which in plan view are in the form of segments of a circle are formed at a distance from the rib edges (2c), assigned in each case to a transverse groove (3, 4) and attached to the rib wall (2b) opposite from the groove mouth (3a, 4a) of the transverse groove (3, 4), with in each case a continuously outwardly curved projection flank (6a) and in each case a plane of symmetry (E₁) which in plan view runs in the axial direction, wherein the projection (6) is delimited in the radial direction by a top surface (6b) and wherein the circumferential groove (1) has laterally with respect to each projection (6) in each case a radially inner groove narrowing (1d), which is delimited by its groove base (1a) together with the projection flank (6a),
**characterized**
**in that**, when seen in the cross section oriented along the plane of symmetry (E₁), the top surface (6b) runs in an S-shaped curved manner, approaches the groove base (1a) as the distance from the rib wall (2b) in the radial direction increases, and tangentially adjoins the projection flank (6a) and tangentially adjoins the rib wall (2b).

2. Commercial vehicle tyre according to Claim 1, **characterized in that**, when seen in plan view, the circumferential groove (1) runs in the form of a wave and imparts to the profile ribs (2) rib indentations (2₁) and rib protuberances (2₂) separated from one another by the circumferential groove (1), wherein each rib protuberance (2₂) is delimited on the rib outer surface (2a) by a rib edge portion (2c₂) which runs in a continuously bent manner and is curved out of the profile rib (2) in the axial direction and which has a rib wall portion (2b₂) adjoining said rib edge portion,
wherein the groove mouths (3a, 4a) of the transverse grooves (3, 4) are in each case situated opposite a rib wall portion (2b₂) adjoining a curved-out rib edge portion (2c₂), and the projections (6) are attached to these rib wall portions (2b₂).

3. Commercial vehicle tyre according to Claim 1 or 2, **characterized in that**, when seen in the cross section running in the axial direction in plan view, the radially inner groove narrowing (1d) has at its narrowest point a width (bₘᵢₙ) of 25% to 65%, in particular of 35% to 55%, of the width (B_{UR}) of the circumferential groove (1) determined in the axial direction in plan view between the rib edges (2c), wherein the width (bₘᵢₙ) of the groove narrowing (1d) is determined between two auxiliary lines (h₃) running in the radial direction, one of which runs through the radially outer end of the projection flank (6a) and the other of which runs through the end of the groove base (1a) facing away from the projection flank (6a) and facing towards the respective groove mouth (3a, 4a).

4. Commercial vehicle tyre according to one of Claims 1 to 3, **characterized in that**,
when seen in the cross section running in the axial direction in plan view, the projection (6) has a maximum height (hᵥ), determined in the radial direction in relation to the level of the profile depth (T_{UR}), of 20% to 50%, in particular of 25% to 40%, of the profile depth (T_{UR}),
and/or
**in that** the projection (6) has a maximum length (cᵥ), determined in the circumferential direction in plan view, of 3.00 mm to 8.00 mm, in particular of 4.00 mm to 7.00 mm.

5. Commercial vehicle tyre according to Claims 2 and 4, **characterized in that** the maximum height (hᵥ) of the projection (6) is at least at the rib wall portion (2b₂).

6. Commercial vehicle tyre according to one of Claims 1 to 5, **characterized in that**, when seen in the cross section oriented along the plane of symmetry (E₁), the projection flank (6a) runs straight and at an angle (γ) of 0° to 20°, in particular of 5° bis 15°, with respect to the radial direction.

7. Commercial vehicle tyre according to one of Claims 1 to 6, **characterized in that** each of the two profile ribs (2) is provided with transverse grooves (3, 4) opening out into the circumferential groove (1).

8. Commercial vehicle tyre according to one of Claims 1 to 7, **characterized in that** the transverse grooves (3, 4) within the or each profile rib (2) are wide transverse grooves (3) and sipe-like transverse grooves (4), which are designed to be narrower at least in some portions than said transverse grooves, wherein the width (B_{QR}) of the wide transverse grooves (3) is 2.00 mm to 10.0 mm, in particular 3.00 mm to 8.00 mm, and the width (B_{QR}') of the sipe-like transverse grooves (4) is 0.40 mm to 2.00 mm, wherein in the circumferential direction a wide transverse groove (3) alternates with a sipe-like transverse groove (4), and wherein the width (B_{QR}') of the sipe-like transverse grooves (4) is preferably smaller by at least 0.50 mm, in particular by at least 1.00 mm, than the width (B_{QR}) of the wide transverse grooves (3).

9. Commercial vehicle tyre according to one of Claims 1 to 8, **characterized in that** each transverse groove (3, 4) of the or each profile rib (2) is respectively assigned one of the projections (6).

10. Commercial vehicle tyre according to one of Claims 1 to 9, **characterized in that** the transverse grooves (3, 4) pass transversely through the profile rib(s) (2).

11. Commercial vehicle tyre according to Claims 7, 8 and 10, **characterized in that** the wide transverse grooves (3) impart to the profile ribs (2) rib blocks (2d) which are each provided with one of the sipe-like transverse grooves (4), wherein each rib edge (2c) in the region of each rib block (2d) is made up of a single rib edge portion (2c₁), which is curved in the axial direction into the associated profile rib (2), two rib edge portions (2c₂), which are curved in the axial direction out of the profile rib (2), and two end rib edge portions (2c₃), which run straight in plan view, such that the circumferential groove (1) is formed by groove portions (1b), which run in a curved wave shape in plan view, and groove portions (1c), which are made shorter than said curved groove portions and run straight.

12. Commercial vehicle tyre according to one of Claims 2 to 11, **characterized in that**, when seen in the cross section running in the axial direction in plan view, each rib wall (2b) is made up of a flank (2b') and a bevel (2b") running to the rib edge (2c), wherein the flank (2b') and the bevel (2b") adjoin one another at a constant depth (t_{b}), determined in the radial direction, of 15% to 30% of the profile depth (T_{UR}), wherein, when seen in the cross section running perpendicular to the rib edge (2c) in plan view, the flank (2b') runs straight and at an, in particular constant, angle (β') of 0° to 3° with respect to the radial direction, and wherein, when seen in the cross section running perpendicular to the rib edge (2c) in plan view, the bevel (2b") appears as a straight line which runs at an angle (β") of 5° to 55°, in particular of up to 50°, with respect to the radial direction, wherein the angle (β") of the bevel (2b") increases continuously from the maximally protruding points (S_{A}) of the curved-out rib edge portions (2c₂) to maximally indented points (S_{E}) of curved-in rib edge portions (2c₁) which adjoin the curved-out rib edge portion (2c₂), wherein the projections (6) are attached to the flanks (2b') and are at a distance in the radial direction from the bevel (2b").

13. Commercial vehicle tyre according to Claim 12, **characterized in that** the greatest value of the angle (β") of the curved bevel (2b") present at the maximally indented points (S_{E}) is at least 15° and the smallest value of the angle (β") of the curved bevel (2b") present at the maximally indented points (S_{E}) is at most 10°.

## Revendications

1. Pneu pour véhicule utilitaire comportant une bande de roulement présentant deux nervures de profil (2), séparées l'une de l'autre par une rainure circonférentielle (1) présentant une profondeur de sculpture (T_{UR}) et un fond de rainure (1a), lesquelles présentent chacune, au niveau de la rainure circonférentielle (1), un bord de nervure (2c) et une paroi de nervure (2b) qui s'y raccorde, un écartement mutuel (a1), déterminé parallèlement à la périphérie de la bande de roulement entre les parois de nervure (2b), lorsqu'il est considéré dans une section orientée dans la direction axiale en vue de dessus, n'augmentant pas en direction du fond de rainure (1a),
au moins une nervure de profil (2) étant pourvue de rainures transversales (3, 4) débouchant dans la rainure circonférentielle (1), présentant une largeur (B_{QR}, B_{QR}') de 0,40 mm à 10,00 mm, une profondeur maximale (T_{QR}, T_{QR}') de 60 % à 100 % de la profondeur de sculpture (T_{UR}) et une ouverture de rainure (3a, 4a) située au niveau de la rainure circonférentielle (1),
des saillies (6) en forme de segment de cercle en vue de dessus étant formées au fond de rainure (1a) de la rainure circonférentielle (1), à distance des bords de nervure (2c), chacune étant associée à une rainure transversale (3, 4) et raccordée à la paroi de nervure (2b) opposée à l'ouverture de rainure (3a, 4a) de la rainure transversale (3, 4), lesdites saillies présentant chacune un flanc de saillie (6a) continûment bombé vers l'extérieur et un plan de symétrie (E₁) s'étendant, en vue de dessus, dans la direction axiale, la saillie (6) étant limitée dans la direction radiale par une surface supérieure (6b), et la rainure circonférentielle (1) présentant latéralement de chaque saillie (6) un rétrécissement de rainure radialement intérieur (1d), délimité notamment par son fond de rainure (1a) et par le flanc de saillie (6a),
caractérisé en ce
la surface supérieure (6b), lorsqu'elle est considérée dans une section orientée le long du plan de symétrie (E1), présente une courbure en forme de S, se rapproche du fond de rainure (1a) dans la direction radiale à mesure que la distance par rapport à la paroi de nervure (2b) augmente, et se raccorde tangentiellement au flanc de saillie (6a) ainsi qu'à la paroi de nervure (2b).

2. Pneu pour véhicule utilitaire selon la revendication 1, **caractérisé en ce que** la rainure circonférentielle (1), considérée en vue de dessus, s'étend sous la forme d'une onde et confère aux nervures de profil (2) des évidements de nervure (2₁) et des renflements de nervure (2₂), séparés les uns des autres par la rainure circonférentielle (1), chaque renflement de nervure (2₂) étant délimité, au niveau de la surface extérieure de nervure (2a), par une section de bord de nervure (2c₂) s'étendant selon une courbure continue et bombée vers l'extérieur de la nervure de profil (2) dans la direction axiale, et présentant une section de paroi de nervure (2b₂) qui s'y raccorde.
les ouvertures de rainure (3a, 4a) des rainures transversales (3, 4) étant situées chacune en regard d'une section de paroi de nervure (2b₂) raccordée à une section de bord de nervure (2c₂) bombée vers l'extérieur, et les saillies (6) étant raccordées à ces sections de paroi de nervure (2b₂).

3. Pneu pour véhicule utilitaire selon la revendication 1 ou 2, **caractérisé en ce que** le rétrécissement de rainure radialement intérieur (1d), lorsqu'il est considéré dans une section s'étendant dans la direction axiale en vue de dessus, présente, à son point le plus étroit, une largeur (bₘᵢₙ) de 25 % à 65 %, en particulier de 35 % à 55 %, de la largeur (BUR) de la rainure circonférentielle (1), déterminée en vue de dessus dans la direction axiale entre les bords de nervure (2c), la largeur (bₘᵢₙ) du rétrécissement de rainure (1d) étant déterminée entre deux lignes auxiliaires (h3) s'étendant dans la direction radiale, dont l'une passe par l'extrémité radialement extérieure du flanc de saillie (6a) et l'autre par l'extrémité du fond de rainure (1a), opposée au flanc de saillie (6a) et tournée vers l'ouverture de rainure (3a, 4a) correspondante.

4. Pneu pour véhicule utilitaire selon l'une quelconque des revendications 1 à 3, **caractérisé en ce que**
la saillie (6), lorsqu'elle est considérée dans une section s'étendant dans la direction axiale en vue de dessus, présente une hauteur maximale (hᵥ), déterminée dans la direction radiale par rapport au niveau de la profondeur de sculpture (T_{UR}), de 20 % à 50 %, en particulier de 25 % à 40 %, de la profondeur de sculpture (T_{UR}),
et/ou
**en ce que** la saillie (6) présente une longueur maximale (cv), déterminée en vue de dessus dans la direction circonférentielle, de 3,00 mm à 8,00 mm, en particulier de 4,00 mm à 7,00 mm.

5. Pneu pour véhicule utilitaire selon les revendications 2 et 4, **caractérisé en ce que** la hauteur maximale (hᵥ) de la saillie (6) est présente au moins au niveau de la section de paroi de nervure (2b2).

6. Pneu pour véhicule utilitaire selon l'une quelconque des revendications 1 à 5, **caractérisé en ce que** le flanc de saillie (6a), lorsqu'il est considéré dans une section orientée le long du plan de symétrie (E₁), s'étend de manière rectiligne et forme avec la direction radiale un angle (γ) de 0° à 20°, en particulier de 5° à 15°.

7. Pneu pour véhicule utilitaire selon l'une quelconque des revendications 1 à 6, **caractérisé en ce que** chacune des deux nervures de profil (2) est pourvue de rainures transversales (3, 4) débouchant dans la rainure circonférentielle (1).

8. Pneu pour véhicule utilitaire selon l'une quelconque des revendications 1 à 7, **caractérisé en ce que** les rainures transversales (3, 4) à l'intérieur de l'une et/ou de chacune des nervures de profil (2) sont des rainures transversales larges (3) et, par rapport à celles-ci, des rainures transversales en forme d'incision (4), plus étroites au moins sur certaines sections, la largeur (B_{QR}) des rainures transversales larges (3) étant de 2,00 mm à 10,0 mm, en particulier de 3,00 mm à 8,00 mm, et la largeur (B_{QR}') des rainures transversales en forme d'incision (4) étant de 0,40 mm à 2,00 mm, une rainure transversale large (3) étant suivie alternativement, dans la direction circonférentielle, d'une rainure transversale en forme d'incision (4), et la largeur (B_{QR}') des rainures transversales en forme d'incision (4) étant de préférence inférieure d'au moins 0,50 mm, en particulier d'au moins 1,00 mm, à la largeur (B_{QR}) des rainures transversales larges (3).

9. Pneu pour véhicule utilitaire selon l'une quelconque des revendications 1 à 8, **caractérisé en ce que** chacune des rainures transversales (3, 4) de l'une et/ou de chacune des nervures de profil (2) est associée à l'une des saillies (6).

10. Pneu pour véhicule utilitaire selon l'une quelconque des revendications 1 à 9, **caractérisé en ce que** les rainures transversales (3, 4) traversent la ou les nervures de profil (2).

11. Pneu pour véhicule utilitaire selon les revendications 7, 8 et 10, **caractérisé en ce que** les rainures transversales larges (3) confèrent aux nervures de profil (2) des blocs de nervure (2d), chacun étant pourvu de l'une des rainures transversales en forme d'incision (4), chaque bord de nervure (2c) étant constitué, dans la zone de chaque bloc de nervure (2d), d'une seule section de bord de nervure (2c1) bombée vers l'intérieur de la nervure de profil (2) dans la direction axiale, de deux sections de bord de nervure (2c2) bombées vers l'extérieur de la nervure de profil (2) dans la direction axiale, et de deux sections terminales de bord de nervure (2c3) s'étendant de manière rectiligne en vue de dessus, de sorte que la rainure circonférentielle (1) est formée de sections de rainure (1b) présentant en vue de dessus une forme ondulée courbe et de sections de rainure (1c) rectilignes, plus courtes que celles-ci.

12. Pneu pour véhicule utilitaire selon l'une quelconque des revendications 2 à 11, **caractérisé en ce que** chaque paroi de nervure (2b), lorsqu'elle est considérée dans une section s'étendant dans la direction axiale en vue de dessus, est constituée d'un flanc (2b') et d'un chanfrein (2b") s'étendant jusqu'au bord de nervure (2c), le flanc (2b') et le chanfrein (2b") se raccordant l'un à l'autre à une profondeur constante (t_{b}), déterminée dans la direction radiale, de 15 % à 30 % de la profondeur de sculpture (T_{UR}), le flanc (2b'), lorsqu'il est considéré dans une section s'étendant en vue de dessus perpendiculairement au bord de nervure (2c), s'étendant de manière rectiligne et formant avec la direction radiale un angle (β'), notamment constant, de 0° à 3°, et le chanfrein (2b"), lorsqu'il est considéré dans une section s'étendant en vue de dessus perpendiculairement au bord de nervure (2c), apparaissant comme une ligne droite formant avec la direction radiale un angle (β") de 5° à 55°, en particulier jusqu'à 50°, l'angle (β") du chanfrein (2b") augmentant de manière continue depuis les points de bombement maximal (S_{A}) des sections de bord de nervure (2c₂) bombées vers l'extérieur jusqu'aux points de creusement maximal (SE) des sections de bord de nervure (2c₁) bombées vers l'intérieur, raccordées aux sections de bord de nervure (2c₂) bombées vers l'extérieur, les saillies (6) étant raccordées aux flancs (2b') et étant espacées des chanfreins (2b") dans la direction radiale.

13. Pneu pour véhicule utilitaire selon la revendication 12, **caractérisé en ce que** la plus grande valeur de l'angle (β") du chanfrein courbe (2b"), présente au niveau des points de creusement maximal (S_{E}), est d'au moins 15°, et la plus petite valeur de l'angle (β") du chanfrein courbe (2b"), présente au niveau des points de creusement maximal (S_{E}), est d'au plus 10°.
